# EUROPEAN PATENT SPECIFICATION

(11) **EP 1 323 085 B1**
(45) Date of publication and mention of the grant of the patent: **22.07.2009**
(21) Application number: 01918342.5
(22) Date of filing: 05.03.2001
(51) Int. Cl.: G06Q 20/00

(54) **FINANCIAL TRANSACTION SYSTEM**
GELDTRANSAKTIONSSYSTEM
SYSTEME DE TRANSACTION FINANCIERE

(30) Priority: 07.09.2000 US 657478
(43) Date of publication of application: 02.07.2003
(73) Proprietor: Euronet Worldwide, Inc., Leawood, KS 66211 (US)
(72) Inventor: CHAMBERLIN, John, Little Rock, AR 72212 (US); LILES, Kevin, G., Little Rock, AR 72211 (US); CLARY, Jeffrey, S., Lenexa, KS 66215 (US)
(74) Representative: Williams, David John
(86) International application number: PCT/US2001/006965
(87) International publication number: WO 2002/021416

(56) References cited:
- EP-A- 1 026 643
- WO-A-00/31699
- WO-A-99/44114
- US-A- 5 719 918
- US-A- 5 812 671
- US-A- 5 987 440
- US-A- 6 041 314
- KRAWCZYK H.: 'SKEME: a versatile secure key exchange mechanism for Internet' NETWORK AND DISTRIBUTED SYSTEM SECURITY, PROCEEDINGS OF THE SYMPOSIUM ON SAN DIEGO 22 February 1996, LOS ALAMITOS, CA, USA, IEEE COMPUT. SOC, US, pages 114 - 127, XP010158990
- YONGGUANG ZHANG; BIKRAMJIT SINGH: 'A MULTI-LAYER IPSEC PROTOCOL' PROCEEDINGS OF THE USENIX SECURITY SYMPOSIUM 14 August 2000, pages 1 - 17, XP002316714

## Description

### Field of the Invention

This invention relates to a financial transaction system for accessing a financial data network through alternative terminal devices.

### Background of the Invention

There is an increasing demand for versatile, mobile, and user-friendly solutions to traditional transactional and information delivery systems. In no industry is the demand greater than the banking, financial services, and electronic transaction industry. Internet communications; high speed, high volume data processing; exponentially growing technological advancement and added consumer initiative for adopting new technologies are increasing the speed with which service industries must offer enhanced services. Banking, financial services, and electronic transaction companies whose businesses are increasingly dominated by the aggregation, archiving, protection, and transfer of electronic financial data are particularly susceptible to these increased consumer demands.

Today, automated teller machines (ATMs) provide consumers with access to financial services on a twenty-four hours per day, seven days per week basis and have resulted in increased convenience for consumers. However, there are many limitations of current ATM/financial networks in use today which result in barriers to more widespread accessibility and use of such networks.

Typically, an ATM terminal in use today is hard-wired in a fixed location. This hard-wiring is necessary to provide power to the ATM terminal and to provide access to communication lines, such as telephone lines, over which financial and transaction data may be exchanged with a financial services provider that sponsors the ATM terminal or to a consumer's financial service provider. Additionally, security concerns may also play a role in limiting ATM terminals to fixed locations.

As a result of the fixed location of such ATM terminals, a financial service provider must ensure the distribution of its ATM terminals over its geographic region so as to maximize consumer access. However, due to consumers' desires to have access to financial services wherever they travel, a financial services provider's initial placement locations of its ATM terminals may not meet the desires of its customers. The financial services provider can, of course, install an increased number of ATM terminals in additional locations. However, the capital costs associated with an ever-increasing amount of equipment for the increased number of ATM terminals can become prohibitive. Additionally, even with the installation of the increased number of ATM terminals, a financial services provider may still not be able to meet consumer demand for accessible ATM terminals. Some locations, such as within trains, buses, or automobiles, may not be practical locations for ATM terminals, even though they are sensible locations for consumers to desire access to financial services.

Additionally, certain value-added financial services may be impractical to provide through a fixed-location ATM terminal, in spite of the fact that such an ATM terminal may provide certain synergies between the financial services and a plurality of financial data and data processing resources available through such ATM terminals. For example, a service providing for a plurality of scheduled- or event-based notifications of account activity, a service for delivery of time-sensitive opportunities, and other services may lose their value if accessible only through fixed-location outlets such as ATM terminals. Consumers desire the convenience of information delivered on a real-time basis, in addition to 24 hours per day, 7 days per week access to services, from their service providers.

There currently exists an international ATM network which allows consumers access to their financial information at a plurality of ATM and point-of-sale (POS) terminals located throughout the world. This international network provides a ready foundation for enabling user access to financial information, without the need of a separate financial data network or a new protocol for communicating with a plurality of financial institutions. However, a plurality of security protocols that are required for enabling a consumer to access data in the ATM network have presented a plurality of technical difficulties in providing the consumer with anywhere/anytime access to the ATM network through use of a personal communication device.

A first technical hurdle has been that many financial institutions require that a variety of data be encoded in a magnetic strip on ATM, debit, and credit cards. This encoded data varies by financial institution, but is generally used to verify and validate that a particular card was in fact issued from the financial institution. However, most personal communication devices, particularly compact wireless communication devices, are not equipped with a card reader that can read the encoded data stored in a magnetic strip. Typically there are at least two "Tracks" of information encoded in such magnetic strips. Track I usually encodes the cardholder's name and card number. Track II data varies by a particular financial institution, but Track II typically includes encoded data for a card number, a personal identification number (PIN) offset, an expiration date, and a security verification in different configurations within Track II, among other data. Further, the Track II data is not in print on the card and is generally not available or ascertainable by the consumer. Because financial institutions require some or all of this data in the particular configuration in which they encode it in order to authorize financial transactions, accessing the ATM network is not a matter of just keying in the consumer's account number through a telephone keypad or similar input device. The Track II data from the consumer's ATM card needs to be transmitted, in its entirety, through the ATM network to enable the consumer to be authorized and/or validated by the financial institutions to conduct financial transactions through the ATM network. This is presently impossible using devices without magnetic card readers.

The second technical hurdle to be overcome is that most financial institutions also require a PIN to be submitted by the consumer (or user) to validate that the user of the card is indeed the cardholder. In other words, the PIN is used to verify the identity of the user of the card for security purposes. Use of PINs is central to the data security of the ATM network and there are strict guidelines imposed by the electronic funds transfer (EFT) networks on how a PIN may be encrypted, stored and manipulated. PINs are submitted to the ATM network as DES-encrypted PIN blocks. A typical ATM machine directly encrypts the PIN submitted by the card user as a DES-encrypted PIN block. However, most personal communication devices, and wireless communication devices in particular, are not equipped with DES encryption capabilities. Furthermore, transmission of a wireless signal containing a PIN that is not encrypted compromises the security of the ATM network, since wireless signals can easily be intercepted. Many wireless device manufacturers and service providers have overcome the transmission security concerns by including encryption capabilities in their wireless networks. However, the wireless encryption standard thus far appears to be secure socket layer (SSL) encryption or wireless socket layer (WTSL) encryption, not DES encryption. A further hurdle exists because ATM network standards prohibit the conversion of data encrypted using one encryption standard into data encrypted using another encryption standard, without the use of a secure hardware encryption device. Thus, it has been impossible for users of wireless devices and personal computers on the Internet to meet the PIN encryption standards of the ATM network.

Accordingly, there is a need for a financial transaction system which is mobile and available for a consumer's use regardless of a location of the consumer.

Additionally, there is a need for a financial transaction system which does not need to be directly connected by hard-wires lines to a power source or a telephone network.

There is an additional need to provide a financial transaction system with the above-mentioned features which does not compromise security of a financial services provider's ATM network.

There is also a need to provide a financial transaction system with the above-described features which does not require a large capital outlay by the financial services provider, wireless service provider, or Internet portal companies.

These and other drawbacks of prior art systems are overcome by the various embodiments of the invention.

WO 00/31699 discloses a system for conducting credit card transactions over a mobile telephone, whereby the user's card number is stored on a SIM card of the mobile telephone and transmitted to a financial institution in a transaction message from the mobile telephone.

### Summary of the Invention

It is therefore an object of the invention to overcome the above-mentioned drawbacks of prior systems.

It is an additional object of the invention to provide a financial transaction system which is mobile and available for a consumer's use regardless of a location of the consumer.

It is a further objection of the invention to provide a financial transaction system which does not require a hard-wired connection to a power source or a telephone network.

It is still further an object of the invention to provide a financial transaction system which does not require a terminal device with a card reader.

It is yet an additional object of the invention to provide a financial transaction system which does not compromise the security of a financial service provider's ATM network and does not require a large capital outlay by the service provider.

Additional objects and advantages of the invention will set forth in part in the description which follows and in part will be obvious from the description, or may be learned by practice of the invention.

According to one aspect of the present invention, there is provided a financial transaction system for providing banking and financial services comprising:
(a) a financial data network utilizing a predetermined data security protocol for receiving and transmitting user financial data;
(b) a transaction management system in communication with said financial data network for executing secure financial service transactions through said financial data network in accordance with the predetermined data security protocol in response to user service requests; and
(c) a communication device for transmitting and receiving user service requests, the user service requests being processed by said transaction management system using financial data retrieved from said financial data network;
wherein said transaction system receives the user service request in a first encryption standard and submits at least a portion of the data from the user service request to said financial data network in a second encryption standard; and
wherein the data security protocol of said financial data network includes validation data embedded in a user-specific security token which is a card;
**characterized in that:**
said transaction management system includes a data source of said validation data linked to at least one user identification, whereby said transaction system can submit the validation data to said financial data network in response to a user service request that does not contain the validation data.

According to another aspect of the present invention, there is provided a data source for use in submission of financial transactions to a financial data network comprising:
(a) a user identifier for a user; and
(b) account validation data for at least one user account associated with said user identifier, said account validation data corresponding to data from a security token which is a card that requires a card reader to access;
**characterized in that**:
the data source is arranged to enable access from a transaction system to formulate a financial service request for the user through the financial data network in response to a user service request that does not contain the account validation data.

The above and other objects of the preferred embodiments are particularly achieved by a financial transaction system and method for providing banking and financial services using a financial data network having a predetermined data security protocol for receiving and transmitting user financial data. The system includes a transaction management system in communication with the financial data network for executing secure financial service transactions through the financial data network in accordance with the predetermined data security protocol. The transaction management system handles user service requests originating from alternative terminal devices, such as wireless communication devices and Internet devices. The transaction management system may include a cryptography system for converting SSL, WTSL or other encryption formats to DES encryption and may include a data source including Track II data from the user's bank and/or credit cards so that the system can be accessed from a device that lacks a magnetic card reader or similar device. The system and method enable ATM like transactions through wireless and Internet devices not equipped with magnetic card readers and DES encryption.

The accompanying drawings, which are incorporated in and constitute a part of the this specification, illustrate an embodiment of the invention and, together with the description, serve to explain the principles of the invention.

### Brief Description of the Drawings

Figure 1 is a schematic view of a wireless financial transaction system for providing banking and financial services via a wireless communications device in accordance with an embodiment of the invention.
Figure 2 is a schematic view a wireless financial transaction system for providing banking and financial services via a wireless communications device in accordance with an embodiment of the invention.
Figure 3 is a schematic view of the software architecture of the wireless financial transaction system for providing banking and financial services via a wireless communications device in accordance with an embodiment of the invention.
Figure 4 is a flow chart illustrating the steps in the process of registering to use the wireless financial transaction system in accordance with an embodiment of the invention.
Figure 5 is a flow chart illustrating the steps in the process of using wireless banking and financial transaction services according to an embodiment of the invention.
Figure 6 is a flow chart illustrating the steps in the process of providing wireless banking and financial transaction services according to an embodiment of the invention.
Figure 7 is a schematic view of a plurality of service end points and interface methods for use with a wireless financial transaction system according to an embodiment of the invention.

### Detailed Description of the Preferred Embodiments

Reference will now be made in detail to the present preferred embodiments of the invention, examples of which are illustrated in the accompanying drawings in which like reference characters refer to corresponding elements.

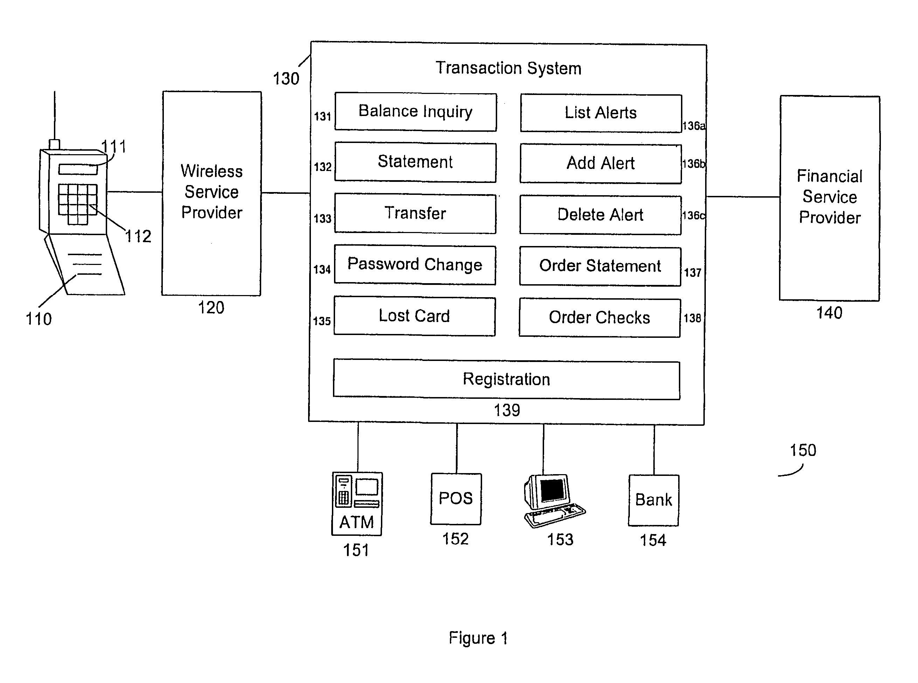

With reference to the figures generally, and particularly Figure 1, a wireless financial transaction system 100 for providing banking and financial services via wireless devices is shown. The system 100 allows a user to access financial and banking services including, but not limited to, those services offered through traditional fixed-location ATMs, through a wireless communication device 110, such as the user's cellular phone, a personal digital assistant (PDA) with a wireless modem, an alphanumeric pager, or another wireless communication device. The system 100 includes a Transaction System 130, which connects a plurality of communication services provided by a Wireless Service Provider 120 and a plurality of financial information provided by at least one Financial Service Provider 140 using ATM network data protocols. The Transaction System 130 may provide for processing of data, data storage, data conversion, and data security for a user accessing the financial and banking services. To use the system 100, the user may initiate a service request transaction through the user's wireless communication device 110, such as by dialing a particular telephone number or an access code. The user may then navigate one or more simple menus or options to initiate and transmit a particular service request, such as a request for current balances for one or more of the user's financial accounts. The service request is received by the Wireless Service Provider 120 and passed to the Transaction System 130. The Transaction System 130 extracts a plurality of relevant security and transaction information from the transmitted service request and initiates execution of at least one application to fulfill the transmitted service request. The application may include an inquiry to one or more financial service providers for accessing financial data using ATM network data transmission protocols. A portion of the application for accessing financial data may include receiving PINs encrypted with an encryption standard other than DES (*e*.*g*., SSL) and using hardware encryption to convert to DES-encrypted PIN blocks in accordance with ATM network standards. Once the application is executed, an appropriate response, such as the requested current balances or other notification, is returned to the user through the Wireless Service Provider 120 and the wireless communication device 110. The Transaction System 130 may also enable communication with other systems, networks, or service end points, such as a plurality of terminal devices 150. The terminal devices 150 may be utilized by the user to register for, maintain, or otherwise access the financial and banking services provided through the Transaction System 130. The terminal devices 150 are each equipped with a magnetic card reader to allow the user to initially register a card having Track II data encoded in a magnetic strip thereon with Transaction System 130 to enable cardless ATM-like transactions.

The wireless communication device 110 may include any device enabled for wireless communications, such as mobile telephones, small computers with wireless modems (*e*.*g*. PDAs, palm tops, *etc.),* pagers, two-way radios, communicators and other personal communication devices. In a preferred embodiment, wireless device 110 may include a mobile telephone utilizing a GSM, a CDMA or a UMTS technology. In one embodiment, the wireless device 110 includes a display 111 (*e*.*g*., an LCD display, a plasma display, *etc*.) and one or more input devices 112 (*e*.*g*., a number pad, one or more navigation buttons, *etc*.). The wireless communication device 110 may be compatible with a communication format for enabling display of data transmitted to the wireless communication device 110 on a display 111 or other output devices. Such communication format may include a format such as a Short Message Service (SMS) format, a Wireless Application Protocol (WAP) format, or another data communication protocol.

The Wireless Service Provider 120 may use one or more systems of any provider of wireless communication services, such as companies providing cellular communication service (*e*.*g*., AT&T, Bell Atlantic Mobile, EuroTel, *etc*.). The Wireless Service Provider 120 may or may not be affiliated with a maintainer of the Transaction System 130 and all or part of the wireless communication systems of the Wireless Service Provider 120 may or may not be integrated with Transaction System 130. In a preferred embodiment, a plurality of wireless service provider systems, such as the system of Wireless Service Provider 120, communicate with and enable the financial and banking transaction services of Transaction System 130 in order to provide those services through the wireless communication devices 110 of the customers of Wireless Service Provider 120.

The Transaction System 130 includes a computer system for receiving a service request, processing the service request, and returning a result from the processing of the service request. Processing the service request may involve contacting and/or exchanging data with one or more financial service providers, such as Financial Service Provider 140; interacting with one or more databases of user information (*e*.*g*., a database containing Track II data of a plurality of users); and carrying out one or more logical operations utilizing data submitted by the user, from the financial service providers, or from the database.

The service requests handled by Transaction System 130 may include a variety of financial and banking services. In a preferred embodiment, these financial and banking services include at least one of a Balance Inquiry service 131, a Statement service 132, a Transfer service 133, a Password Change service 134, a Lost Card service 135, an Alert service 136, an Order Statement service 137, an Order Checks service 138, and a Registration service 139. Alert service 136 includes a List Alert service 136a, an Add Alert service 136b, and a Delete Alert service 136c. Additional services may include bill payment, bill amount presentment, charging and recharging pre-paid accounts, and miscellaneous services and information requests.

Each of the financial and banking services may include one or more application objects for executing the financial/banking service. One or more of the financial and banking services may include an inquiry or another data exchange with one or more financial service providers using ATM network data protocols. In order to facilitate each such financial and banking service transaction, an application object may query a database containing user information including Track II data in order to submit the Track II data for a user to Financial Service Provider 140. An application object may then receive a non-DES encrypted PIN (*e*.*g*., an SSL-encrypted PIN), send the encrypted PIN to a hardware cryptography system for conversion to a DES-encrypted PIN block. Some financial and banking service transactions may not utilize ATM network data and their application objects may predominantly use data retrieved from the user information database or other data sources.

The Balance Inquiry service 131 allows a user to access the current balance of one or more financial accounts of the user. In one embodiment, the user submits an SSL encrypted message containing a card number and a PIN through a wireless communication device 110 to the Transaction System 130; the Transaction System 130 converts the submitted PIN to a DES encryption format and retrieves Track II information for the user from the user information database; directs the inquiry and the Track II security information for the user to the appropriate Financial Service Provider 140 for the user; receives data back from the Financial Service Provider 140 corresponding to a current balance in the financial account of the user; and formats and returns the current balance or balances information for one or more of the user's accounts to the wireless communication device 110 of the user.

The Statement service 132 allows the user to access a plurality of details of one or more past transactions for one or more financial accounts of the user. The Statement service 132 includes a fixed or a variable number of transactions or all of the transactions for a fixed or a variable time period which affected the balance of the user's account for display to the user. The Statement service 132 may allow the user to search for a particular transaction by one or more fields (*e*.*g*., date, payee, amount, *etc*.). The Statement service 132 may use the converted PIN data and the Track II registry information for the user to submit a query for transaction information from the Financial Service Provider 140 using ATM network protocols.

The Transfer service 133 allows a user to transfer funds from at least one of the user's accounts with one Financial Service Provider 140 to another of the user's accounts with the Financial Service Provider 140 or with another one of the Financial Service Providers 140. The Transfer service 133 may use the converted PIN data and the Track II registry information for the user to submit a query for transaction information from the Financial Service Provider 140 using ATM network protocols.

The Password Change service 134 allows a user to change the user's password, if the user has chosen to use an additional security feature of a wireless banking password. Alternatively, the user may register his or her PIN in the user information database and use a password to initiate transactions through Transaction System 130. This prevents the user's actual PIN from ever being transmitted over the system 100. Because the password of the user is a password specific to the Transaction System 130, it is unnecessary to access any Financial Service Provider 140 or utilize the converted PIN data or Track II information of the system 100.

The Lost Card service 135 allows a user to report a lost or stolen ATM card, a lost or stolen debit card, or a lost or stolen credit card to the Financial Service Provider 140 that issued the lost or stolen card so that appropriate actions can be taken to block use of the lost or stolen card. The Lost Card service 135 may use the converted PIN data and the Track II registry information for the user to allow the Financial Service Provider 140 to verify the user's identity upon receiving the lost or stolen card report from the user.

The Alert service 136 allows a user to view, subscribe to, and unsubscribe from one or more scheduled or conditional financial information alerts and management messaging services through wireless communication device 110. Some examples of types of alerts that might be provided to the user include: a regularly-scheduled alert of an account balance (*e*.*g*., providing a regularly-scheduled update alert informing the user of the user's current checking account balance); an alert to monitor conditional changes in an account balance (*e*.*g*., an alert warning the user when a transaction takes the balance of the account below a minimum required balance); an alert for reporting a transaction to the user as the transaction occurs, such as a notification of a POS or an ATM debit over $100, or a notification of a completion of an ACH transaction; or any other scheduled or conditional delivery of information. The Alert service 136 may include an alert containing informational content not directly related to the user's personal financial account information, such as an alert of a rise or a fall in current market interest rates, an alert of a price for a particular stock, an alert including sports scores, an alert including weather information, an alert including advertising and marketing information, and other general convenience information. The Alert service 136 may be used to establish one or more personal reminders for the user, such as an alert for upcoming holidays, an alert of a birthday, an alert including at least one due date for payment of a bill for goods or services, and an alert of another event. List Alert service 136a allows a user to access a complete list of all alerts for which the user subscribed. Add Alert service 136b allows a user to add a subscription for a new alert. Delete Alert service 136c allows a user to delete an existing alert subscription. Because the Alert service 136 may be maintained within the Transaction System 130, it is unnecessary to access any Financial Service Provider 140 or utilize the converted PIN data or the Track II information features of the system 100 in order to modify the alerts for which the user has subscribed in the Alert service 136.

The Order Statement service 137 allows a user to request a hard copy or electronic bank or credit card statement from the appropriate Financial Service Provider 140 for the user's records or to replace a lost statement. The Order Statement service 137 may use the converted PIN data and the Track II registry information to allow the Financial Service Provider 140 to verify the user's identity upon receiving a statement order request.

The Order Checks service 138 allows a user to easily order a plurality of replacement checks for a plurality of checks originally issued by the Financial Service Provider 140 of the user. The Order Checks service 138 may use the converted PIN data and the Track II registry information to allow the Financial Service Provider 140 to verify the user's identity upon receiving the check order. Alternatively, the Transaction System 130 may use a third party provider to fulfill an order for checks and may access information available from the user information database, such as a name, an address, a telephone number, an account number, bank information and a routing number for the user.

The Registration service 139 allows the user to initially establish a user information file in the user information database and, specifically, to store the Track II data from the user's ATM card. The Registration service 139 is not accessed via the wireless communication device 110. Instead, the Registration service 139 is accessed through an alternate endpoint in communication with the Transaction System 130, such as a terminal device 150. The user initiates the Registration service 139 by swiping the user's ATM card through a magnetic card reader in communication with the terminal device 150, and the Transaction System 130 records at least the Track II data transmitted via the card reader and the terminal device 150 within a registration file in the user information database. Registration service 139 may also prompt the user for other information or may be able to access additional information, such as a plurality of contact information for the user, through the user records of Wireless Service Provider 120 or Financial Service Provider 140. Registration service 139 may be accessed through ATMs (*e*.*g*., ATM 151), POS system 152 in a Wireless Service Provider 120's retail store over the Internet from a terminal or a personal computer equipped with a magnetic card reader (*e*.*g*., personal computer 153, or a magnetic card reader (not shown)) or at a bank (*e*.*g*., Bank 154 using a PIN setting system) with a magnetic card reader or another bank network terminal equipped with a magnetic card reader.

The Financial Service Provider 140 may include any number of financial institutions and financial data networks. The Financial Service Provider 140 may be comprised of a plurality of any one or more traditional brick and mortar banks, Internet ("virtual") banks, a plurality of savings and loan companies, a plurality of credit unions, a plurality of brokerage houses, a plurality of credit card companies, a plurality of retail companies which extend credit, a plurality of mortgage companies, a plurality of loan servicing companies, a plurality of billing companies, and a plurality of other businesses and institutions that maintain secure financial accounts and other data. Transaction System 130 enables the financial and banking services utilizing data exchanged with Financial Service Provider 140 based upon ATM network protocols. Transaction System 130 may also utilize other forms of data exchange with Financial Service Provider 140 to enable some or all of the financial and banking services available.

Terminal Devices 150 may include a variety of devices, networks and/or systems enabled to access one or more services provided by Transaction System 130. Transaction System 130 may enable a wide variety of access types and communication formats, in addition to the wireless access to banking and financial services described herein. For example, Transaction System 130 may enable service access over the Internet, service access via telephone systems, service access through POS systems and ATMs and service access through other communication mediums and device configurations. Terminal devices 150 each equipped with at least one magnetic card reader enable the registration of the user's Track II data through the Registration service 139.

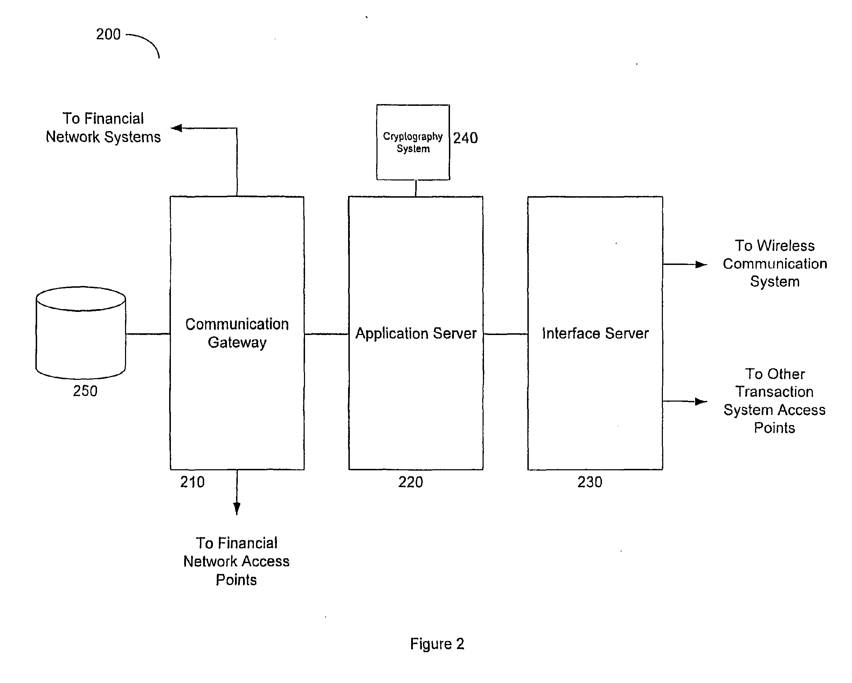

In Figure 2, a transaction system 200 for providing banking and financial services is shown. The transaction system 200 includes a Communication Gateway 210, an Application Server 220, and an Interface Server 230. The transaction system 200 acts as an intermediary between: a plurality of financial network systems maintained by financial service providers, such as the Financial Service Providers 140 described above with regard to Figure 1; a plurality of financial network access points, such as POS terminals 152 and ATMs 151; one or more wireless communication systems, such as the system of Wireless Service Provider 120 described above in relation to Figure 1; and a plurality of other transaction system access points, such as the terminal devices 150 described above in relation to Figure 1. Interface Server 230 allows a user to access a plurality of financial and banking services through a variety of service end points, such as a personal digital assistant (PDA), a cellular or mobile phone, an ATM, a POS terminal and other devices. Interface Server 230 may include a plurality of interface servers to support a plurality of different communications protocols and interface standards for enabling one or more types of service end points or terminal devices to communicate with the plurality of financial service providers. The Application Server 220, in communication with the Interface Server 230, includes a variety of modular applications for providing a plurality of financial and banking services, such as the services described above in relation to Figure 1. The Application Server 220 may be connected to a Cryptography System 240 to provide conversion of data encrypted in one or more other encryption standards to DES encryption. The Application Server 220 may direct a plurality of communications relating to the user's financial and banking services, such as an account balance inquiry, an electronic fund transfer, and other transactions with a plurality of outside financial network systems, through Communication Gateway 210. Communication Gateway 210 acts to properly direct or route the plurality of communications to one or more systems and access points within a financial network, such as the international ATM network. A data repository 250 contains a plurality of personalized account information for a plurality of users, thereby enabling additional financial and banking services to be provided to such plurality of users. For example, data repository 250 may include a user database with a plurality of Track II data and encrypted PIN blocks from each of the plurality of users' ATM, debit and credit cards.

In order to route the plurality of communications, as referenced above, the Communication Gateway 210 includes a plurality of switching and monitoring hardware and software for directing the plurality of communications relating to the user's financial and banking services (such as electronic financial data) to a predetermined destination (the Financial Service Provider 140) according to the communications protocols appropriate to the Financial Service Provider 140. Communication Gateway 210 further includes a hub for directing traffic in electronic financial data among a plurality of otherwise incompatible communications networks and financial data systems. Communication Gateway 210 may also include a plurality of communication channels and network connections for communicating the electronic financial data using ATM data encryption standards, electronic funds transfer (EFT) data encryption standards, Internet-based data encryption standards, proprietary data encryption standards, and other data encryption standards for secure data transfer. For example, Communication Gateway 210 may receive transactions in from an ATM, a financial institution, another EFT gateway, a POS terminal, or Application Server 220 (e.g, a transaction from a Web banking or a banking-enabled wireless phone user). Upon receipt of the transaction, Communication Gateway 210 determines the issuer using a Bank Identification Number (BIN) included in the data received, such as Track II data from a user's debit card. If the BIN belongs to a local bank, the transaction will be routed to the local bank for authorization. If the BIN does not belong to a local bank, then a routing decision will be made depending on the BIN number of the card. This routing decision will be determined by comparing the BIN to routing tables maintained in the software of Communication Gateway 210. When the BIN or some appropriate digits of the bin are found the transaction is routed to the appropriate other gateway or financial institution for authorization. If the BIN is not found in the routing tables then a default gateway will be used to authorize the transactions. In one embodiment, a message from the application server may be received in a proprietary format and converted to a format appropriate for the issuing endpoint after the routing decision is made. An authorization will be received from the authorizing issuer and the transaction will be approved or declined based on the issuer's response. The Communication Gateway 210 may also perform balancing and settlement with the authorizing issuer, as well as with the acquiring service provider.

In order to perform the above-described functions, Communication Gateway 210 preferably includes an AS/400 platform with an OS/400 operating system. Communication Gateway 210 may further include ITM 2.2 software for account access and associated settlement.

Application Server 220 includes one or more servers for hosting a plurality of financial and banking service applications. Such financial and banking service applications may include any service relating to personalized banking, finance, money management, payment transactions or investments. Application Server 220 further includes a platform for running the plurality of financing and banking applications. Application Server 220 utilizes a modular application design supporting standard interface objects to provide a flexible, readily expandable, and largely hardware-independent system for providing financial service applications. For example, Application Server 220 may be an enterprise application server running a plurality of applications composed of a plurality of interchangeable application modules (*e*.*g*., Enterprise JavaBeans). One such interchangeable application module may be used to enable Application Server 220 to offer financial and banking services through and respond to service inquiries from interface server 230. Another may enable Application Server 220 to initiate transactions (*e*.*g*., transfers and queries) with external financial network systems or data repository 250.

In one embodiment, the Application Server 220 may be comprised of one Microsoft NT 4.0 server having a 500 mhz or faster CPU system with at least 1-2 gigabytes of memory, running WebLogic and Microsof's SQL software, and having a plurality of SCSI disks with a RAID controller. In an alternate embodiment, the Application Server 220 may include a Microsoft NT 4.0 server having at least a 500 mhz CPU system with at least 0.5 to 1 gigabytes of memory, running Microsoft's SQL 7.0 software, and having a plurality of SCSI disks with a RAID controller. The alternate embodiment may be linked to a second server with additional memory running the WebLogic software. Additionally, it is preferable to include a plurality of ethernet cards and a network capable of processing 100 megabits per second for communication with other portions of the system.

Application Server 220 is connected to, and communicates with, Cryptography System 240 in order to enable the encryption of data in DES-encrypted PIN blocks compatible with ATM network data encryption standards. For example, the Cryptography System 240 may be comprised of a hardware component for decrypting a PIN received from the Application Server 220 in an encryption format other than DES (e.g., SSL, WTSL, etc.). An encrypted message, along with a marker to designate the location of the PIN within the message, is passed into the hardware component. Within the hardware component, the message is decrypted from the SSL or WTSL encryption and the PIN is extracted and converted to DES encryption. The DES encrypted PIN block is passed back out of the hardware component to be added to a decrypted message for delivery to the gateway. The hardware component is tamper proof such that any attempt to open the component's casing disables the component. In this way, the PIN is never present in an unencrypted electronic or visible form which could be subject to misappropriation through physical or electronic surveillance.

Interface Server 230, connected to the Application Server 220, provides a plurality of user interfaces for accessing one or more financial and banking service applications hosted on the Application Server 220. The Interface Server 230 may include a plurality of servers hosting a plurality of interfaces for one or more communication protocols and intended end points. For example, Interface Server 230 may include a short messaging service (SMS) server, a wireless application protocol (WAP) server, a Web server, an ATM server, a POS system server, an automated telephone server, *etc*. The SMS server provides one or more short text messages for interactively exchanging information with the user and may be accessed by the user using any SMS-enabled device, such as a cellular phone, an alphanumeric pager, or another wireless device with limited display capabilities. The WAP server may provide one or more interface pages, such as pages written in Wireless Markup Language (WML, an extensible markup language (XML) application), for interactively exchanging information with the user and is accessible to the user using any device supporting WAP, such as a mobile phone, a pager, a two-way radio, a smart phone, a communicator, and another handheld wireless device. At least a portion of the content available through the Interface Server 230 may be provided by one or more applications from the Application Server 220.

A data repository 250 may include any number of individual data repositories containing financial data or related information. The data repository 250 may be a localized data resource, such as a database or a group of databases, or it may be a distributed resource, such as a batch of locatable files distributed across a network. Data repository 250 includes a repository of user-specific financial and banking account information and associated account access information, such as bank card or credit card magnetic strip information, including Track II data, for one or more users. Data repository 250 may include a registration file for each user including: a plurality of transactional audit information, such as an end device identification (*e*.*g*., a unique identifier associated with a user's wireless device), a date and time of transaction indicator, a system audit trace number, and other information; a plurality of wireless information, such as a wireless service provider identification, a wireless phone number or an address, or other information; a plurality of card information, such as a card number, an expiration date, a plurality of Track II data, a DES-encrypted PIN block, a plurality of Track I data (*e*.*g*., user name), an issuer identifier (a bank name, a routing number, *etc*.); a plurality of record control information, such as a status and a data maintenance indicator; a plurality of historical information, such as a plurality of statistics on the user's prior use of an account; and a plurality of user personal information, such as a name and other contact information. Information related to a number of accounts provided by a variety of financial institutions but belonging to the same user may be linked together or localized for more efficient access.

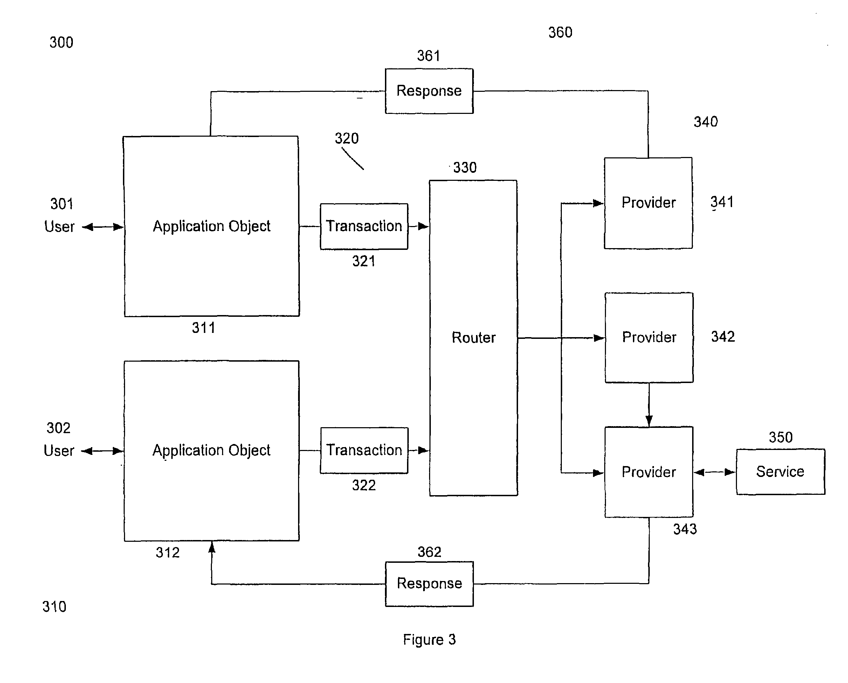

In Figure 3, a software architecture of a modular system 300 for processing a plurality of user service requests according to an embodiment of the invention is shown. Modular system 300 may be used by an application server, such as the Application Server 220 in Figure 2, to process the plurality of user service requests placed through the wireless communication device 110. Modular system 300 includes a number of application objects 310, such as Application Objects 311 and 312. Application Objects 311 and 312 are each used as a standard entry path for a plurality of user service requests, such as from Users 301 and 302. Application Objects 311 and 312 create a transaction 320, such as Transactions 321 and 322, that describe a plurality of actions to be performed. Router 330 evaluates Transactions 321 and 322 and directs Transactions 321 and 322 to an appropriate provider 340, such as one of Providers 341, 342 and 343. Providers 341, 342 and 343 provide the operations for completing Transactions 321 and 322. In some cases, a provider, such as Provider 343, may issue a Service Request 350 to access an external resource, such as financial data maintained by a financial institution, a user information database, or a cryptography system. Providers 341, 342 and 343 may either direct the transaction to another service provider or may return a response 360, such as Responses 361 and 362, to Application Objects 311 and 312.

Application Objects 310 each provide a standard entry path for a plurality of user Service Requests 350 and initiate a plurality of transactions 320 within modular system 300. Application Objects 310 represent a plurality of individual actions that the modular system 300 may be called on to perform. Some example Application Objects 210 might include an account balance inquiry obj ect, a statement obj ect, or a plurality of objects corresponding to any of the other financial and banking services described with reference to Figure 1. In one embodiment, each application object 310 is a stateless Enterprise JavaBean (EJB) and is accessible to a user via a Java Naming and Directory Interface (JNDI) (not shown). Each Application Object 310 creates a transaction 320 that describes an action to be performed and contains a plurality of user information necessary to initiate the action. For example, a balance inquiry object would be used to create a balance inquiry transaction and would contain basic user information such as a user identifier (*e*.*g*., an ATM card number, *etc*.) and a PIN. Where a user has multiple accounts, the balance inquiry object may also include an account identifier. Each application object 310 may also call Router 330 in order to determine a destination provider 340 to process transaction 320. In one embodiment, Application Object 310 passes transaction 320 to Router 330 where Router 330 evaluates transaction 320 and passes it to a selected provider 340. Alternatively, Router 330 may evaluate transaction 320, but Application Object 310 actually passes transaction 320 to the selected provider 340 identified by Router 330. Each Application Object 310 may also receive a response 360 from the selected provider 340 and pass the response 360 back to a user, such as users 301 and 302. Each Application Object 310 may also be able to call a provider 340 to undo, retry, or alter a transaction 320 in response to the response 360, a new input from the user, or other system conditions.

A Transaction 320, such as Transactions 321 and 322, may include the data required by providers 340 to fulfill the function of Application Object 310. Transaction 320 may include basic transaction information, such as a unique identifier, a time stamp, a status marker, an originator, and a destination (or a list of providers 340 for completing the transaction). Any amount of additional transaction-specific information may be added to a transaction 320 as a data item. In one embodiment, the data item includes one or more key/value pairs providing a description of the data, such as an account number or a PIN, and the data itself, for example, Account # 012345, DES encrypted PIN block 9876FCA456BDE802. The data item may include a wide variety of data and file types and formats, such as a plurality of numbers, a plurality of flags, a plurality of strings, a plurality of data files, *etc.* Some example data objects might include a graphic file of a canceled check, a sound file of a voice recognition sample, or a spreadsheet of a plurality of recent transactions affecting a balance of an account. The data may further include a token including data returned in a response from a previous transaction. In one embodiment, each transaction 320 is stored as an XML document for access, evaluation, and modification by Router 330 and providers 340. In another embodiment, each transaction 320 contains a complete record of the history of the transaction. Each transaction 320 may be automatically stored in a database and may be archived for later retrieval.

Router 330 determines a Provider 340 to handle transaction 320. Router 330 uses a combination of transaction details and/or system information to determine the optimal destination Provider 340. For example, Router 330 may route the transaction data according to an account number, a transaction amount, or a user name. Multiple Routers 330 may be employed by modular system 300 to perform such routing. A single transaction 320 may be routed several times over the course of its processing and Router 330 may be used by Providers 340 as well as Application Objects 310. In one embodiment, Router 330 includes a routing table in the format of an extensible markup language (XML) document that lists a plurality of conditions and/or a plurality of rules under which transactions 320 should be routed to a particular provider, such as one of Providers 341, 342 or 343.

Providers 341, 342 and 343 utilize a plurality of modules that include a logic set for completing at least a portion of the plurality of functions performed by one or more Application Objects 310. Such Providers 340 use the data stored within the transaction 320 to perform each such function. Providers 340 may return a response to the Application Object 310 which created the transaction 320 or may pass the transaction 320 to another Provider 340, with or without consulting Router 330. Provider 340 performs its function(s) locally using the data from transaction 320 and a plurality of local resources and a plurality of system information and returns a response 361 to the Application Object 210. Some Providers 340, such as Provider 342, may also perform the function(s) locally using the data from transaction 320 and a plurality of local resources and a plurality of system information, however, such function(s) may be only a portion of the total function(s) required by the Application Object 310. The transaction 320 may be modified to include data generated by Provider 342 and may then be routed to another Provider 340, such as Provider 343. Some Providers 340, such as Provider 343, may route all or a portion of the data contained in the transaction 320 to a Service 350 and may then receive a plurality of responsive data from the Service 350 to formulate a Response 362 to the Application Object 210. In one embodiment, a number of such Providers 340 may simultaneously work on the same transaction 320. In another embodiment, the Providers 340 may pursue a same goal through a plurality of different channels. For example, multiple Providers 340 may perform multiple Services 350 to get a most rapid response where a plurality of response times vary (*e*.*g*., one service may be faster than another service for any given request depending on a server availability factor and other factors).

A Service 350, such as a data courier service or a communication protocol service, may be used to exchange data with an external resource, such as a financial network system, a cryptography system, or a data repository. Each Service 350 may be customized for a plurality of communications protocols and a plurality of data requirements of a specific external resource. Service 350 may both send and receive data and the received data may then be delivered to the service Provider 340 which initiated the Service 350, or may be added to the transaction 320 and/or may be returned to the Application Object 310 in a Response 360.

Responses 361 and 362 may each contain an answer or a resolution to the transaction 320 created by the Application Object 310. Responses 361 and 362 may each include information requested by Application Object 310 or may include an explanation of why the request set forth in Application Object 310 could not be fulfilled. In one embodiment, a Response 360 may include a value to indicate whether or not the transaction 320 was successfully completed; a message that explains why the transaction 320 was not successfully completed; if necessary, a token, such as a reference to the present transaction 320, that can be used as part of a subsequent transaction; and a plurality of additional data items (as described above with respect to the transaction 320). The information returned in Responses 360 may be returned in whole or in part to the user who initiated use of Application Objects 310 and/or may be the basis of a further transaction 320 initiated through the same or another Application Object 310.

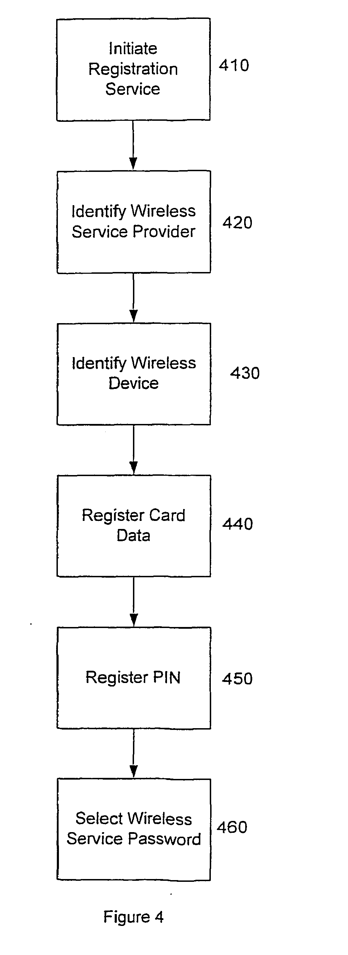

Figure 4 shows a flow chart illustrating the steps in the process of registering to use a wireless financial transaction system, such as the system described above with reference to Figures 1-3. Registration allows a user to identify the wireless communication device 110 (or other device) through which the transaction system will be accessed and to provide the Track II data from one or more of the user's magnetic cards (*e*.*g*., ATM cards, debit cards, credit cards, *etc*.) for which a plurality of transactions will be enabled. In step 410, a registration service is initiated with the transaction system from a terminal device equipped with a magnetic card reader. For example, a user may be able to go to an ATM and select a registration service from a menu of services; the user may be able to use a POS terminal or another dedicated registration terminal at a retail outlet, such as a registration terminal located at a facility of a wireless telephone/service vendor; the user may be able to access a Web site from a personal computer equipped with a peripheral magnetic card reader and select a registration option; or the user may be able to go to a bank that issued a particular card and use a PIN-setting terminal or another bank terminal with a magnetic card reader to initiate the registration service. In step 420, a wireless service provider for the user is identified. For example, the user selects from a menu of a plurality of available wireless service providers that enable a plurality of wireless financial transactions to be conducted through the transaction system. In step 430, a wireless communication device, or another device, is identified for use by the user in accessing the transaction system. For example, the user may input a wireless telephone number for the wireless communications device, a network address provided by the wireless service provider of the user, or a device identification number or a code (*e*.*g*., a unique identifier provided by a manufacturer of the wireless communication device). The transaction system may use this inputted information to automatically identify (*e*.*g*., caller ID) a source of any incoming service request and access user information for the user without requiring any other input from the user. In step 440, the user's magnetic card data is registered and stored in a data source accessible to the transaction system. For example, the user may swipe his or her magnetic card through the magnetic card reader on the terminal device the user is using to register, and the information from the magnetic card (*e*.*g*., the Track II data, *etc*.) is sent to the transaction system to be recorded in the user information database, which may be located internal or external to the transaction system. Steps 450 and 460 may be optional for one or more users, depending upon the user's security concerns and the encryption capabilities of the user's wireless communication device. In step 450, the user registers his or her PIN supplied by the card issuing financial institution. The user's encrypted PIN may be recorded within the user information database and used by the transaction system when accessing data using ATM network protocols. Registration of the PIN prevents the user from ever having to send the PIN over a network via a wireless communication device, particularly a wireless communication device without encryption capabilities. In step 460, the user selects a wireless service password. The wireless service password may be used by the transaction system to verify the identity of the user. The wireless service password may be used for accessing a plurality of services provided by transaction system which do not require the full security measures of the user's PIN or such services as may be used by users who have previously registered their PINs with the system. The wireless service password may also be used in conjunction with a device identification and the user's PIN to provide a higher level of security.

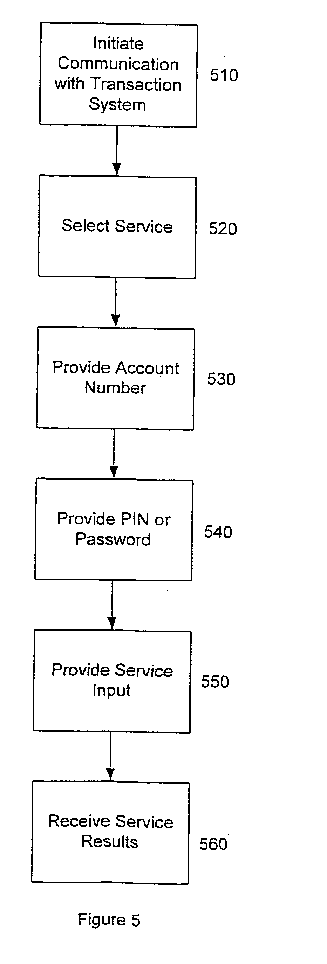

Figure 5 shows a flow chart illustrating the steps in the process of using a plurality of wireless banking and financial transactions services through a wireless communication device and transaction system, such as the system described above with regard to Figures 1-3. This process allows a user to utilize one or more financial and banking services available through a transaction system, such as any of the financial and banking services described with reference to Figure 1. In step 510, a communication is initiated with the transaction system. For example, the user may dial a particular phone number or an access code from his or her wireless communication device. Alternatively, the user may initiate a button, shortcut, menu option, or similar object for initiating a transaction through a Web or wireless Web based communication device. In step 520, a service is selected from a plurality of available service options. For example, the user may be provided with a list or a menu of a plurality of available services (*e*.*g*., a balance inquiry service, a statement service, a transfer service, *etc*.) and the user may indicate which one of the plurality of services he or she is interested in using. Alternatively, the user may enter a command code indicating the service desired. In step 530, an account number for one or more accounts the user may wish to access is provided to the transaction system. The transaction system may be enabled to identify the user (*e*.*g*., by caller ID) and may automatically provide an account number for the user. If the user has multiple accounts enabled for wireless transactions, he or she may be able to select one such account from a list of enabled accounts provided by the transaction system. In step 540, a PIN or a password may be provided to verify the identity of the user of the wireless communication device and to authorize transactions of the user. For example, the user may be prompted for his or her PIN associated with the account number selected. Alternatively, the user may be prompted for a password to enable the use of stored PIN data accessible to the transaction system. In step 550, the user may provide any additional input necessary to facilitate execution of the service selected. For example, the user may be able to select a number of transactions or a plurality of dates of transactions to be displayed in a statement to be generated by the statement service, or the user may make a selection of a particular alert to add or delete from a prior list of alert preferences for the user. In some cases, a selection of the service and a provision of an account number or other user identification will be all of the user input necessary for executing the selected service. In one embodiment, steps 520-550 may be combined in a single step wherein the user enters a service code followed by an account number; a PIN, and any other information necessary to execute the selected service. Similarly, a plurality of aliases, a plurality of specially defined services, or a plurality of dedicated buttons may allow a user to initiate an oft-used service without requiring the user to directly select or key in the information needed in steps 520-550. In step 560, the results of the service request are provided to the user. For example, an account balance or a list of transactions is displayed on the display of the user's wireless communication device. In some cases, an indicator of a success or a failure of a transaction may be the results returned to the user. One or more of the above steps may be repeated one or more times for multiple service transactions or for a single service transaction including multiple exchanges between the user and the transaction system.

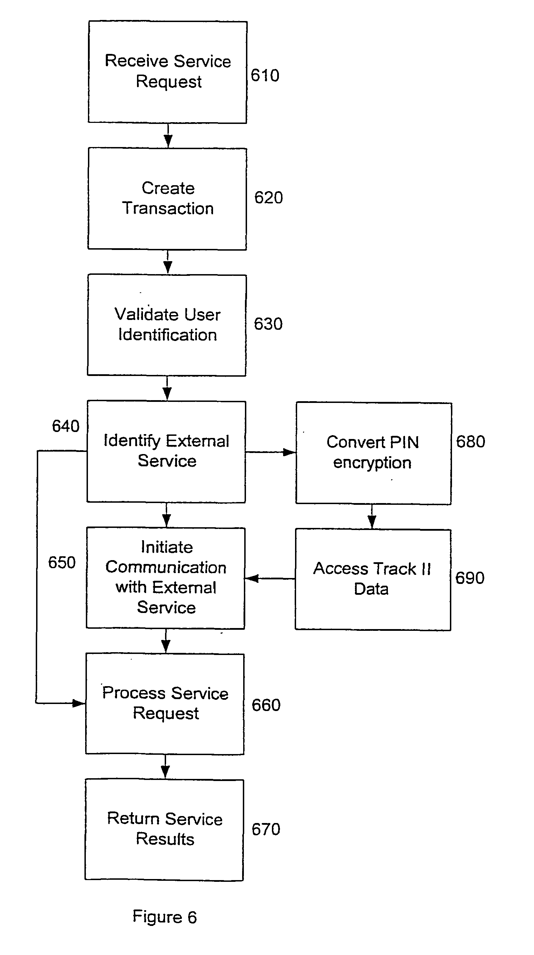

Figure 6 shows the steps conducted in a process of providing wireless banking and financial transactions using a transaction system, such as the transaction system described above with reference to Figures 1-3. In step 610, the transaction system receives a service request from a user. The service request may be received in a single communication or may utilize multiple communications to accumulate all of the user information required to execute the service request. In step 620, the transaction system creates a transaction to monitor information related to the service request and to initiate processing of the service request. In step 630, the transaction system validates the user identification. For example, validation of the user identification may include identifying the wireless communication device or a source of the service request (*e*.*g*., using caller ID and comparing the identified number to a database of registered user numbers), receiving or retrieving one or more account numbers and comparing them to the registered account numbers, receiving or retrieving one or more PINs and comparing them to the registered PINs, and/or receiving a password and comparing it to an expected user password (associated with the user's wireless communication device, the user's account number, or other submitted user identification). In step 640, the transaction system identifies any requirements to exchange data with external resources, such as financial institutions using ATM network protocols. If no external resources are required, the transaction system may proceed to step 660 and process the service request internally. If an external service is required, but a communication protocol other than that used by the ATM network is required, the transaction system may proceed to step 650 and initiate communication with the external service. If the external service uses the ATM network communication protocols, then the transaction system may proceed to steps 680 and 690 to generate a DES-encrypted PIN block and access registered Track II data for the user. When the DES-encrypted PIN block is generated and the Track II data for the user has been accessed, the transaction system may proceed to step 650. In step 650, the transaction system initiates any communications required with external resources to fulfill the service request. In step 660, the transaction system completes any further processing for the service request. In step 670, results of the service request are returned by the transaction system to the user who made the service request, via the wireless communication device through which the service request was made. These steps may be processed in a plurality of alternative orders and one or more of the steps may be repeated one or more times to handle multiple service requests or more complex service requests.

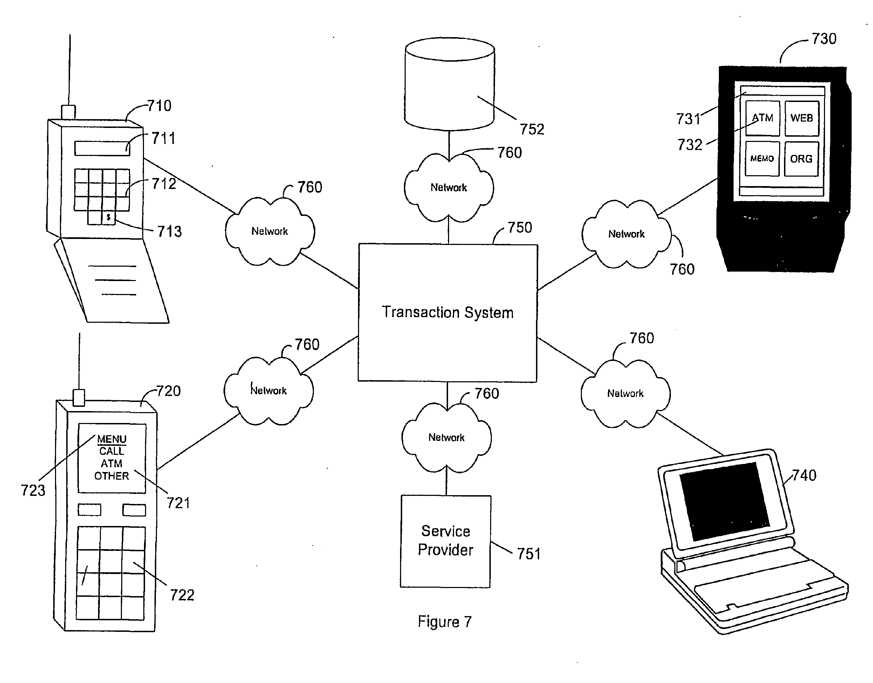

In Figure 7 a plurality of service end points utilizing a variety of interface procedures are shown. An SMS enabled cellular telephone 710, a WAP enabled cellular telephone 720, a PDA with a wireless modem 730, and a laptop computer with a modem 740 are shown connected to a Transaction System 750 through one or more network connections 760. The Transaction System 750 is also connected to through network connections 760 to at least one Service Provider 751 and data source 752. Transaction System 750 may be a transaction system substantially as shown and described with reference to Figures 1-6. Service Provider 751 may be a financial data provider, such as a bank, credit card company, billing company, or communication provider, or another service provider, such as a content provider. Data source 752 may be a registry of user data, such as a database containing account numbers, Track II data, passwords, and other information, for facilitating wireless financial transactions through an electronic funds transfer network, such as an ATM network. Network connections 760 may include one or more communication networks, such as a wireless communication network and the Internet.

The SMS enabled cellular telephone 710 includes a display 711 (e.g., an LCD text display) for displaying a text message and a plurality of buttons 712 for providing user input, including numeric and/or alphanumeric input. In one embodiment, telephone 710 includes button 713 for initiating a service transaction through transaction system 750. Button 713 may be a dedicated button for launching financial applications or may be a programmable function key pre-programmed to initiate a service transaction. When the user of telephone 710 wishes to initiate a transaction, button 713 is pressed. Pressing button 713 initiates a communication with a particular telephone number, URL, or through another communication protocol for initiating a link to an interface server in Transaction System 750. In one embodiment, telephone 710 includes a programmable random access memory (e.g., SIM, etc.) including at least a portion of the application logic and/or data (e.g., menu structure, security protocol, etc.) resident in the telephone. In a thin client telephone, pressing button 713 may send an initial message to an interface server in Transaction System 750 which then returns a series of text prompts or instructions for navigating one or more applications. In example operation of telephone 710, the user may first be prompted to enter an account number, user ID, or other identifier. The user may then be prompted for a PIN, password, or other security verification. Once identity and security are verified by Transaction System 750, the user may be prompted to enter "1" for a balance inquiry, "2" for an account statement, "3" for a balance transfer, or "4" for more options. The user may then navigate one or more number driven menus by using the number keys included in buttons 712 to utilize one or more applications.

The WAP enabled cellular telephone 720 includes a display 721 (e.g., a graphical LCD display) for displaying a graphical user interface and a plurality of buttons 722 for providing user input. Telephone 720 may include a WAP browser application for rendering interface data provided by the interface system of Transaction System 750. In one embodiment, telephone 720 may include one or more applets stored in telephone 720's memory for enabling one or more applications provided by Transaction System 750. In one embodiment, telephone 720 includes a main menu of telephone functions 723, from which a user may select "ATM" functions or some other designation for initiating service transactions with Transaction System 750. Selection of the ATM choice from the menu of options may direct telephone 720 to establish communication through a wireless Web URL corresponding to one or more interface systems included in Transaction System 750. The user may then navigate a series of alphanumeric, graphical, or combination interfaces for prompting user input and providing information from Transaction System 750. Navigation of menus and options provided on display 721 may be accomplished through numeric prompts, as described for telephone 710 above, or may use alternate navigation buttons (e.g., arrow keys), a pointer based navigation system (e.g., touch screen and stylus, finger pad, etc.), or another navigation system. In one embodiment, the interface is rendered from one or more WML documents and/or Java applications included in Transaction System 750.

The PDA with a wireless modem 730 may include a graphical display 731 incorporating an input device, such as a touch screen (with or without a stylus). Other input devices may also be used, such as navigation keys, a keyboard, a mouse, voice recognition hardware and software, or another peripheral or integrated input device. In the example shown, PDA 730 includes an icon and window driven graphical user interface. The applications available through Transaction System 750 may be accessed using a browser, with or without applets or other logic and/or data stored within the PDA 730. Initiating service transactions through Transaction System 750 may include launching the browser and directing it to a URL corresponding to the appropriate interface system in Transaction System 750. Launching the browser, establishing a network connection, and contacting the URL may or may not be integrated in one or more steps. In the embodiment shown, an icon 732 (e.g., shortcut) is provided to quick launch the browser, establish a connection, and contact the URL in a single step. Bookmarks, favorites, or other procedures may also be used. In one embodiment, the interface is rendered from one or more WML or HTML documents and/or Java applications included in Transaction System 750.

The laptop computer with modem 740 may include a display 741, input device 742 (e.g., keyboard), and other integral and peripheral components as are known in the art. Laptop computer 740 may access Transaction System 750 and initiate transaction services through one or more Web sites and one or more corresponding URLs available on the World Wide Web. In one embodiment, the applications of Transaction System 750 are enabled through one or more Web pages and viewed using a Web browser, such as Netscape Navigator or Internet Explorer. The Web pages may be accessed through any method of navigating the World Wide Web as is known in the art. In one embodiment, an icon which acts as a shortcut may be enabled on the user's desktop or integrated into another application, such as a financial management application (e.g., Quicken or Microsoft Money). In one embodiment, an icon corresponding to a hypertext link to the Web site's URL may be integrated in one or more other Web sites, such as a user's homepage, a financial portal Web site, a financial services Web site, etc. Applications in Transaction System 750 enabled through one or more Web pages on the World Wide Web may be accessible through both wireless connections (e.g., a wireless modem), as described above, or through wire based connections (e.g., modems, network adapters, etc.). Applications in Transaction System 750 may also utilize one or more applications resident in the memory of laptop computer 740, such as applets or full applications. These applications may be downloadable or otherwise distributed to user's for use in their service end devices.

The combinations of service end devices and interface protocols described with reference to Figure 7 above are examples only and are not intended to be exhaustive of all available combinations of wireless device and compatible interface and navigation methods. Further combinations and the advantages and disadvantages of those combinations will be readily apparent to those of skill in the art.

This invention has been described in connection with the preferred embodiments. These embodiments are intended to be illustrative only. It will be readily appreciated by those skilled in the art that modifications may be made to these preferred embodiments without departing from the scope of the invention as defined herein.

## Claims

1. A financial transaction system for providing banking and financial service comprising:
(a) a financial data network utilizing a predetermined data security protocol for receiving and transmitting user financial data;
(b) a transaction management system (130,120) in communication with said financial data network for executing secure financial service transactions through said financial data network in accordance with the predetermined data security protocol in response to user service requests; and
(c) a communication device (110,710) for transmitting and receiving user service requests, the user service requests being processed by said transaction management system (120,130) using financial data retrieved from said financial data network;
wherein said transaction management system receives the user service request in a first encryption standard and submits at least a portion of the data from the user service request to said financial data network in a second encryption standard; and
wherein the data security protocol of said financial data network includes validation data embedded in a user-specific security token which is a card;
**characterized in that:**
said transaction management system includes a data source of said validation data linked to at least one user identification, whereby said transaction management system can submit the validation data to said financial data network in response to a user service request that does not contain the validation data.

2. The system of claim 1, wherein the financial transaction system is a wireless financial transaction system, and the communication device is a wireless communication device for wirelessly transmitting and receiving the user service requests.

3. The system of claim 1, wherein the data security protocol of said financial data network includes a DES encrypted PIN and said transaction system includes a cryptography system for converting a PIN to DES encryption.

4. The system of claim 3, wherein the cryptography system is adapted to receive the PIN encrypted in an encryption other than DES encryption and to return the PIN in DES encryption.

5. The system of claim 1, wherein said second encryption standard other than DES is SSL or WTSL encryption.

6. The system of claim 1, wherein the validation data is Track II data and the user-specific token is a card including a magnetic data strip.

7. The system of claim 1, further comprising a registration terminal in communication with said transaction management system and including a card reader, whereby a user can submit said validation data to said transaction management system for storage in the data source.

8. The system of claim 1, wherein the said transaction management system includes a communication gateway (210), an application sever (220), and an interface server (230).

9. The system of claim 1, wherein said transaction management system includes a financial data network gateway for directing financial data among a plurality of financial service providers and/or other financial data network gateways included in said financial data network.

10. The system of claim 1, wherein said transaction management system is an SMS device, a WAP device, or a Web-enabled device.

11. A data source for use in submission of financial transactions to a financial data network (760) comprising:
(a) a user identifier for a user; and
(b) account validation data for at least one user account associated with said user identifier, said account validation data corresponding to data from a security token which is a card that requires a card reader to access;
**characterized in that**:
the data source is arranged to enable access from a transaction management system to formulate a financial service request for the user through the financial data network (760) in response to a user service request that does not contain the account validation data, the data source being arranged to provide said account validation data to said transaction management system such that in response to said user service request the transaction management system can submit the validation data to the financial data network in said financial service request.

12. The data source of claim 11, wherein the validation data is Track II data and the security token is a card including a magnetic data strip containing the Track II data.

13. The data source of claim 11, further comprising a plurality of account identifiers for the user, each of said plurality of account identifiers associated with said account validation data for accessing each account.

14. The data source of claim 11, further comprising user validation data for validation of the user prior to submitting a financial service request including said account validation data to the financial data network.

15. The data source of claim 14, wherein said user validation data includes a password and/or a terminal device identifier.

16. The data source of claim 11, further comprising an encrypted PIN associated with said account validation data for submission to the financial data network in a financial service request.

17. A method of providing financial transactions based upon data from a financial data network that uses a predetermined security protocol involving account validation data from a user specific security token in the form of a card, the method comprising the steps of:
(a) receiving a service request (610) from a user using a networked terminal device (710,720,740), the service request including means for identifying a user account and including neither a PIN encrypted to meet the predetermined security protocol of the financial data network nor said account validation data from the user's card for use in the predetermined security protocol;
(b) providing a PIN encrypted to meet the predetermined security protocol of the financial data network by submitting a PIN not encrypted to meet the predetermined security protocol to a cryptography system which returns the PIN encrypted to meet the predetermined security protocol;
(c) providing account validation information corresponding to the account validation data from the user's card, by accessing a data source from a transaction management system, the data source containing the account validation data from the user's card for an account specified by the user service request;
(d) initiating a financial service transaction through the financial data network (760,750) including the PIN encrypted to meet the predetermined security protocol and account validation data of the user's card; and
(e) returning to the user a result for the service request based upon the outcome of the financial service transaction.

18. The method of claim 17, wherein the PIN returned is DES encrypted.

19. The method of claim 17, wherein the account validation data includes Track II data and the user's security token is a card with a magnetic data strip.

20. The method of claim 17, further comprising the step of receiving the user's account validation data from the user's card through a registration terminal device including a card reader and saving the account validation data to a data source for use in step (c), said networked terminal device of the user being a communication device not equipped with said card reader.

## Patentansprüche

1. Finanztransaktionsanordnung zur Bereitstellung von Bank- und Finanzdienstleistungen, die aufweist:
(a) ein Netzwerk für Finanzdaten, das ein vorgegebenes Datensicherheitsprotokoll verwendet, um Finanzdaten eines Nutzers entgegenzunehmen und zu übertragen;
(b) ein Transaktionsverwaltungssystem (130,120), die mit dem Netzwerk für Finanzdaten in Verbindung steht, um als Reaktion auf Dienstleistungsanforderungen eines Nutzers in Übereinstimmung mit dem vorgegebenen Datensicherheitsprotokoll sichere Finanzdienstleistungstransaktionen über das Netzwerk für Finanzdaten auszuführen; und
(c) eine Kommunikationsvorrichtung (110,710) zur Übertragung und Entgegennahme von Dienstleistungsanforderungen eines Nutzers, wobei die Dienstleistungsanforderungen des Nutzers unter Verwendung von Finanzdaten, die aus dem Netzwerk für Finanzdaten abgerufen werden, durch das Transaktionsverwaltungssystem (120,130) verarbeitet werden;
wobei das Transaktionsverwaltungssystem die Dienstleistungsanforderung des Nutzers in einem ersten Verschlüsselungsstandard entgegennimmt und zumindest einen Teil der Daten aus der Dienstleistungsanforderung des Nutzers in einem zweiten Verschlüsselungsstandard an das Netzwerk für Finanzdaten weitergibt; und
wobei das Datensicherheitsprotokoll des Netzwerks für Finanzdaten Daten zur Gültigkeitsprüfung aufweist, die in einem benutzerspezifischen Sicherheitsmerkmal eingebettet sind, das eine Karte ist;
**dadurch gekennzeichnet, dass:**
das Transaktionsverwaltungssystem eine Datenquelle der Daten zur Gültigkeitsprüfung aufweist, die mit zumindest einer Nutzeridentifikation verknüpft sind, wodurch das Transaktionsverwaltungssystem als Reaktion auf eine Dienstleistungsanforderung des Nutzers, die die Daten zur Gültigkeitsprüfung nicht enthält, die Daten zur Gültigkeitsprüfung an das Netzwerk für Finanzdaten übergeben kann.

2. Anordnung nach Anspruch 1, wobei das Finanztransaktionssystem ein drahtloses Finanztransaktionssystem ist und die Kommunikationsvorrichtung eine drahtlose Kommunikationsvorrichtung zur drahtlosen Übertragung und zum drahtlosen Empfang der Dienstleistungsanforderungen des Nutzers ist.

3. Anordnung nach Anspruch 1, wobei das Datensicherheitsprotokoll des Netzwerks für Finanzdaten eine DES verschlüsselte PIN aufweist und die Transaktionsvorrichtung eine Verschlüsselungsanordnung zur Umwandlung einer PIN in eine DES Verschlüsselung aufweist.

4. Anordnung nach Anspruch 3, wobei die Verschlüsselungsanordnung angepasst ist, um die PIN in einer anderen Verschlüsselung als der DES Verschlüsselung verschlüsselt entgegenzunehmen und die PIN in DES Verschlüsselung zurückzugeben.

5. Anordnung nach Anspruch 1, wobei der zweite Verschlüsselungsstandard eine anderer als DES ist und eine SSL oder WTSL Verschlüsselung ist.

6. Anordnung nach Anspruch 1, wobei die Daten zur Gültigkeitsprüfung Track II Daten sind und das benutzerspezifische Merkmal eine Karte ist, die einen Magnetstreifen mit Daten aufweist.

7. Anordnung nach Anspruch 1, die weiterhin eine Anmeldungsstation aufweist, die mit dem Transaktionsverwaltungssystem in Verbindung steht und einen Kartenleser aufweist, wodurch ein Nutzer die Daten zur Gültigkeitsprüfung in das Transaktionsverwaltungssystem zur Speicherung in der Datenquelle eingeben kann.

8. Anordnung nach Anspruch 1, wobei das Transaktionsverwaltungssystem eine Kommunikationsschnittstelle (210), einen Applikationsserver (220) und einen Schnittstellenserver (230) aufweist.

9. Anordnung nach Anspruch 1, wobei das Transaktionsverwaltungssystem eine Schnittstelle zum Netzwerk für Finanzdaten aufweist, um Finanzdaten zwischen einer Vielzahl von Finanzdienstleistungsanbietern und/oder anderen Schnittstellen des Netzwerks für Finanzdaten zu lenken, die das Netzwerk für Finanzdaten aufweist.

10. Anordnung nach Anspruch 1, wobei die Transaktionsverwaltungsanordnung eine SMS Anordnung, eine WAP Anordnung, oder eine internetfähige Anordnung ist.

11. Datenquelle zur Verwendung bei der Eingabe von Finanztransaktionen in ein Netzwerk für Finanzdaten (760), die aufweist:
(a) eine Nutzeridentifikation für einen Nutzer; und
(b) Daten zur Kontogültigkeitsprüfung für zumindest ein Nutzerkonto, das der Nutzeridentifikation zugeordnet ist, wobei die Daten zur Kontogültigkeitsprüfung Daten von einem Sicherheitsmerkmal entsprechen, das eine Karte ist, die einen Kartenleser erfordert, um auf sie zuzugreifen;
**dadurch gekennzeichnet, dass:**
die Datenquelle eingerichtet ist, um den Zugriff von einem Transaktionsverwaltungssystem zu ermöglichen, um für den Nutzer als Reaktion auf eine Dienstleistungsanforderung des Nutzers, die die Daten zur Kontogültigkeitsprüfung nicht enthält, durch das Netzwerk für Finanzdaten (760) eine Finanzdienstleistungsanforderung zu formulieren, wobei die Datenquelle eingerichtet ist, um die Daten zur Kontogültigkeitsprüfung dem Transaktionsverwaltungssystem zur Verfügung zu stellen, so dass das Transaktionsverwaltungssystem als Reaktion auf die Dienstleistungsanforderung des Nutzers die Daten zur Gültigkeitsprüfung in der Finanzdienstleistungsanforderung an das Netzwerk für Finanzdaten übergeben kann.

12. Datenquelle nach Anspruch 11, wobei die Daten zur Gültigkeitsprüfung Track II Daten sind und das Sicherheitsmerkmal eine Karte ist, die einen Magnetstreifen mit Daten aufweist, die die Track II Daten enthalten.

13. Datenquelle nach Anspruch 11, die weiterhin eine Vielzahl von Kontoidentifikatoren für den Nutzer aufweist, wobei jeder der Vielzahl von Kontoidentifikatoren mit den Daten zur Kontogültigkeitsprüfung für den Zugriff auf jedes Konto verknüpft ist.

14. Datenquelle nach Anspruch 11, die weiterhin Nutzerdaten zur Gültigkeitsprüfung für die Gültigkeitsprüfung des Nutzers vor der Eingabe einer Finanzdienstleistungsanforderung einschließlich der Daten zur Kontogültigkeitsprüfung in das Netzwerk für Finanzdaten aufweist.

15. Datenquelle nach Anspruch 14, wobei die Nutzerdaten zur Gültigkeitsprüfung ein Passwort und/oder einen Datenstations-Identifikator aufweisen.

16. Datenquelle nach Anspruch 11, die weiterhin eine verschlüsselte PIN aufweist, die mit den Daten zur Kontogültigkeitsprüfung zur Eingabe in das Netzwerk für Finanzdaten in einer Finanzdienstleistungsanforderung verknüpft ist.

17. Verfahren zum Bereitstellen von Finanztransaktionen basierend auf Daten eines Netzwerks für Finanzdaten das ein vorgegebenes Sicherheitsprotokoll verwendet, das Daten zur Kontogültigkeitsprüfung von einem nutzerspezifischen Sicherheitsmerkmal in der Form einer Karte einbezieht, wobei das Verfahren die nachfolgenden Schritte aufweist:
(a) Entgegennehmen einer Dienstleistungsanforderung (610) von einem Nutzer unter Verwendung einer netzwerkgestützten Datenstationsvorrichtung (710, 720, 740), wobei die Dienstleistungsanforderung Mittel zur Identifikation eines Nutzerkontos aufweist und weder eine PIN, die so verschlüsselt ist, dass sie das vorgegebene Sicherheitsprotokoll des Netzwerks für Finanzdaten erfüllt, noch die Daten zur Kontogültigkeitsprüfung von der Karte des Nutzers zur Verwendung in dem vorgegebenen Sicherheitsprotokoll aufweist;
(b) Bereitstellen einer PIN, die so verschlüsselt ist, dass sie das vorgegebene Sicherheitsprotokoll des Netzwerks für Finanzdaten erfüllt, durch Eingeben einer PIN, die nicht so verschlüsselt ist, dass sie das vorgegebene Sicherheitsprotokoll erfüllt, in eine Verschlüsselungsanordnung, die die PIN so verschlüsselt zurückliefert, dass diese das vorgegebene Sicherheitsprotokoll erfüllt;
(c) Bereitstellen von Information der Kontogültigkeitsprüfung entsprechend den Daten zur Kontogültigkeitsprüfung von der Karte des Nutzers durch Zugreifen auf eine Datenquelle eines Transaktionsverwaltungssystems, wobei die Datenquelle die Daten zur Kontogültigkeitsprüfung von der Karte des Nutzers für ein durch die Dienstleistungsanforderung des Nutzers vorgegebenes Konto enthält;
(d) Auslösen einer Finanzdienstleistungstransaktion durch das Netzwerk für Finanzdaten (760, 750) einschließlich der PIN, die so verschlüsselt ist, dass sie das vorgegebene Sicherheitsprotokoll erfüllt, und der Daten zur Kontogültigkeitsprüfung der Karte des Nutzers; und
(e) Rückgabe eines Ergebnisses für die Dienstleistungsanforderung an den Nutzer basierend auf dem Ergebnis der Finanzdienstleistungstransaktion.

18. Verfahren nach Anspruch 17, wobei die zurückgegebene PIN DES verschlüsselt ist.

19. Verfahren nach Anspruch 17, wobei die Daten zur Kontogültigkeitsprüfung Track II Daten aufweisen und das Sicherheitsmerkmal des Nutzers eine Karte mit einem Magnetstreifen mit Daten ist.

20. Verfahren nach Anspruch 17, das weiterhin den Schritt des Entgegennehmens der Daten des Nutzers zur Kontogültigkeitsprüfung von der Karte des Nutzers durch eine Anordnung einer Anmeldungsstation aufweist, die einen Kartenleser aufweist, und Speichern der Daten zur Kontogültigkeitsprüfung in eine Datenquelle zur Verwendung in Schritt (c), wobei die netzwerkgestützte Datenstationsvorrichtung des Nutzers eine Kommunikationsanordnung ist, die nicht mit dem Kartenleser ausgestattet ist.

## Revendications

1. Système de transactions financières destiné à fournir des services bancaires et financiers comprenant :
(a) un réseau de données financières utilisant un protocole prédéterminé de sécurité de données pour recevoir et émettre des données financières d'utilisateur ;
(b) un système (130, 120) de gestion de transactions en communication avec ledit réseau de données financières pour exécuter des transactions sûres de services financiers par l'intermédiaire dudit réseau de données financières selon le protocole prédéterminé de sécurité de données en réponse à des demandes de service d'utilisateur ; et
(c) un dispositif (110, 710) de communication destiné à émettre et recevoir des demandes de service d'utilisateur, les demandes de service d'utilisateur étant traitées par ledit système (120, 130) de gestion de transactions en utilisant des données financières récupérées à partir dudit réseau de données financières ;
dans lequel ledit système de gestion de transactions reçoit la demande de service d'utilisateur dans une première norme de cryptage et soumet au moins une partie des données de la demande de service d'utilisateur audit réseau de données financières dans une seconde norme de cryptage ; et
dans lequel le protocole de sécurité de données dudit réseau de données financières inclut une donnée de validation incorporée dans un jeton de sécurité spécifique à l'utilisateur qui est une carte ;
**caractérisé en ce que** ledit système de gestion de transactions inclut une source de données de ladite donnée de validation liée à au moins une identification d'utilisateur, ce par quoi ledit système de gestion de transactions peut soumettre la donnée de validation audit réseau de données financières en réponse à une demande de service d'utilisateur qui ne contient pas la donnée de validation.

2. Système selon la revendication 1, dans lequel le système de transactions financières est un système sans fil de transactions financières, et le dispositif de communication est un dispositif de communication sans fil pour émettre et recevoir sans fil les demandes de service d'utilisateur.

3. Système selon la revendication 1, dans lequel le protocole de sécurité de données dudit réseau de données financières inclut un numéro personnel d'identification (PIN pour "Personal Identification Number") crypté selon la norme de cryptage de données (DES pour "Data Encryption Standard") et ledit système de transactions inclut un système de cryptographie destiné à convertir le PIN en cryptage selon la DES.

4. Système selon la revendication 3, dans lequel le système de cryptographie est apte à recevoir le PIN crypté dans un cryptage autre que le cryptage selon la DES et à renvoyer le PIN en cryptage selon la DES.

5. Système selon la revendication 1, dans lequel ladite seconde autre norme de cryptage autre que la DES est le cryptage par étiquette de sécurité standard (SSL pour "Standard Security Label") ou par WTSL.

6. Système selon la revendication 1, dans lequel la donnée de validation est la donnée "Track II" et le jeton spécifique à l'utilisateur est une carte incluant une bande magnétique de données.

7. Système selon la revendication 1, comprenant en outre un terminal d'enregistrement en communication avec ledit système de gestion de transactions et incluant un lecteur de carte, ce par quoi un utilisateur peut soumettre ladite donnée de validation audit système de gestion de transactions pour mémorisation dans la source de données.

8. Système selon la revendication 1, dans lequel ledit système de gestion de transactions inclut une passerelle (210) de communication, un serveur (220) d'applications et un serveur (230) d'interface.

9. Système selon la revendication 1, dans lequel ledit système de gestion de transactions inclut une passerelle de réseau de données financières destinée à diriger des données financières entre une pluralité de fournisseurs de services financiers et/ou d'autres passerelles de réseau de données financières incluses dans ledit réseau de données financières.

10. Système selon la revendication 1, dans lequel ledit système de gestion de transactions est un dispositif de service de messages courts (SMS pour "Short Message Service"), un dispositif sous protocole d'application sans fil (WAP pour "Wireless Application Protocol") ou un dispositif utilisable sur le Web.

11. Source de données pour utilisation à la soumission de transactions financières à un réseau (760) de données financières, comprenant :
(a) un identificateur d'utilisateur pour un utilisateur ; et
(b) une donnée de validation de compte pour au moins un compte d'utilisateur associé audit identificateur d'utilisateur, la donnée de validation de compte correspondant à une donnée provenant d'un jeton de sécurité qui est une carte qui exige un lecteur de carte pour accéder ;
**caractérisée en ce que** la source de données est agencée pour permettre l'accès à partir d'un système de gestion de transactions pour formuler une demande de service financier pour l'utilisateur par l'intermédiaire du réseau (760) de données financières en réponse à une demande de service d'utilisateur qui ne contient pas la donnée de validation de compte, la source de données étant agencée pour fournir ladite donnée de validation de compte audit système de gestion de transactions de façon qu'en réponse à ladite demande de service d'utilisateur le système de gestion de transactions puisse soumettre la donnée de validation au réseau de données financières dans ladite demande de service financier.

12. Source de données selon la revendication 11, dans laquelle la donnée de validation est la donnée de Track II et le jeton de sécurité est une carte incluant une bande magnétique de données contenant la donnée de Track II.

13. Source de données selon la revendication 11, comprenant en outre une pluralité d'identificateurs de compte pour l'utilisateur, chacun de ladite pluralité d'identificateurs de compte étant associé à ladite donnée de validation de compte pour accéder à chaque compte.

14. Source de données selon la revendication 11, comprenant en outre une donnée de validation d'utilisateur pour validation de l'utilisateur avant de soumettre au réseau de données financières une demande de service financier incluant ladite donnée de validation de compte.

15. Source de données selon la revendication 14, dans laquelle ladite donnée de validation d'utilisateur inclut un mot de passe et/ou un identificateur de dispositif terminal.

16. Source de données selon la revendication 11, comprenant en outre un PIN crypté associé à ladite donnée de validation de compte pour soumission au réseau de données financières dans une demande de service financier.

17. Procédé de fourniture de transactions financières basé sur des données provenant d'un réseau de données financières qui utilise un protocole prédéterminé de sécurité impliquant une donnée de validation de compte provenant d'un jeton de sécurité spécifique à l'utilisateur sous la forme d'une carte, le procédé comprenant les étampes :
(a) de réception d'une demande (610) de service provenant d'un utilisateur utilisant un dispositif terminal (710, 720, 740) mis en réseau, la demande de service incluant un moyen destiné à identifier un compte d'utilisateur et n'incluant ni un PIN crypté pour satisfaire le protocole prédéterminé de sécurité du réseau de données financières ni ladite donnée de validation de compte provenant de la carte de l'utilisateur pour utilisation dans le protocole prédéterminé de sécurité ;
(b) de fourniture d'un PIN crypté pour satisfaire le protocole prédéterminé de sécurité du réseau de données financières en soumettant un PIN non crypté pour satisfaire le protocole prédéterminé de sécurité à un système de cryptographie qui renvoie le PIN crypté pour satisfaire le protocole prédéterminé de sécurité ;
(c) de fourniture d'une information de validation de compte correspondant à la donnée de validation de compte provenant de la carte de l'utilisateur, en accédant à une source de données d'un système de gestion de transactions, la source de données contenant la donnée de validation de compte provenant de la carte de l'utilisateur pour un compte spécifié par la demande de service d'utilisateur ;
(d) de lancement d'une transaction de service financier par l'intermédiaire du réseau (760, 750) de données financières incluant le PIN crypté pour satisfaire le protocole prédéterminé de sécurité et la donnée de validation de compte de la carte de l'utilisateur ; et
(e) de renvoi à l'utilisateur d'un résultat pour la demande de service basé sur le résultat de la transaction de service financier.

18. Procédé selon la revendication 17, dans lequel le PIN renvoyé est crypté selon la DES.

19. Procédé selon la revendication 17, dans lequel la donnée de validation de compte inclut une donnée de Track II et le jeton de sécurité de l'utilisateur est une carte avec une bande magnétique de données.

20. Procédé selon la revendication 17, comprenant en outre l'étape de réception de la donnée de validation de compte de l'utilisateur en provenance de la carte de l'utilisateur par l'intermédiaire d'un dispositif terminal d'enregistrement incluant un lecteur de carte et de sauvegarde de la donnée de validation de compte dans une source de données pour utilisation à l'étape (c), ledit dispositif terminal mis en réseau de l'utilisateur étant un dispositif de communication non équipé dudit lecteur de carte.
